# EUROPÄISCHE PATENTSCHRIFT

(11) **EP 3 257 619 B1**
(45) Veröffentlichungstag und Bekanntmachung des Hinweises auf die Patenterteilung: **24.07.2019**
(21) Anmeldenummer: 17175530.9
(22) Anmeldetag: 12.06.2017
(51) Int. Cl.: B23P 19/00, B23P 19/06, B65D 25/10, F16B 27/00, B25H 3/02, B25H 3/04

(54) **SCHRAUBENMAGAZIN**
SCREW MAGAZINE
MAGASIN POUR VIS

(30) Priorität: 17.06.2016 DE 102016111093; 10.02.2017 DE 102017102708
(43) Veröffentlichungstag der Anmeldung: 20.12.2017
(73) Patentinhaber: adunoX GmbH, 36304 Alsfeld/Eifa (DE)
(72) Erfinder: Schmidt, Björn, 63679 Schotten (DE)
(74) Vertreter: Hebing, Norbert

(56) Entgegenhaltungen:
- EP-A1- 2 292 386
- WO-A1-01/09526
- WO-A1-2007/129971
- DE-C- 849 069
- US-A- 3 718 252
- US-A- 4 187 975
- US-A1- 2011 108 446

## Beschreibung

Die Erfindung bezieht sich auf ein Schraubenmagazin zur stehenden Aufnahme von Schrauben in wenigstens zwei Reihen gemäß dem Oberbegriff des Anspruches 1.

Ein derartiges Schraubenmagazin wird in der US 3,718,252 beschrieben. Die beiden Platten sind an einer Kante miteinander über eine als Griff bezeichnete und schräg zu den Platten verlaufende Wand miteinander verbunden. Ansonsten gibt es bis auf die Schrauben keine Verbindung zwischen den Platten. Solange das Schraubenmagazin gefüllt ist, ist eine ausreichende Steifigkeit gewährleistet. Je weiter sich das Magazin leert, desto mehr geht die Steifigkeit verloren, so dass die noch im Magazin vorhandenen Schrauben nicht mehr genau platziert werden können.

In der US 2011/108446 ist ein Schraubenmagazin offenbart, das in einem Block Kanäle zur Aufnahme von Schrauben aufweist.

Weitere Schraubenmagazine (im Folgenden in Kurzfassung auch als "Magazin" bezeichnet) sind z. B. aus der DE 600 15 163 T2 sowie aus der WO 2007/129971 A1 bekannt.

Das Schraubenmagazin gemäß der DE 600 15 163 T2 wird von einer Wellpappe gebildet. Diese weist mehrere parallel verlaufende gerade Wände auf, zwischen denen sich jeweils ein Wellenband befindet, wobei Wellenmaxima und -minima an den Wänden anliegen und mit diesen verklebt sind. Auf diese Weise bilden sich etwa dreieckige Kanäle, in denen die Schrauben eingesteckt werden, wobei ihre Schäfte das Wellenband und die Wände berühren. Der Schraubenkopf liegt zunächst noch vor dem Kanal; beim Einschrauben der Schraube drückt er die Wände des Kanals zur Seite.

Da außerdem die Schraubenköpfe seitlich über den Querschnitt des Kanals hinausragen, können nicht alle Kanäle des Magazins mit Schrauben bestückt werden. Vielmehr muss zwischen zwei Schrauben mindestens ein Kanal frei bleiben. Dies erlaubt keine dichte Packung der Schrauben.

Das Magazin gemäß der WO 2007/1299 71 ist ein Kunststoffteil, das mehrere nebeneinander liegende Schächte besitzt, die Wand an Wand liegen, wobei von den Schachtwänden Längsrippen abstehen, die die Schrauben in dem Kanal zentrieren, indem sich ihre freien Kanten an das Gewinde der Schraube anlegen. Beim Einschrauben der Schraube werden die Rippen zur Seite gedrückt.

Beide Magazine sind zur manuellen Handhabe gedacht. Da die Schraubenspitzen nicht über die untere Seite des Magazins hervorragen, können sie vom Handwerker auf die jeweilige Arbeitsfläche plan aufgesetzt werden, wobei die Schrauben exakt senkrecht zur Arbeitsfläche stehen und sodann mittels eines Schraubendrehers in die Arbeitsfläche eingeschraubt werden.

Es sind auch Systeme zur automatischen Zuführung von Schrauben zu einem motorbetriebenen Schraubendreher bekannt. Dabei werden die Schrauben in einer einzigen Reihe in einem Magazinband gehalten. Die Schrauben ragen entweder durch eine Öffnung im Magazinband oder werden in seitlichen Aufnahmen am Magazinband eingeclipst.

Über spezielle Vorrichtungen am Schraubendreher wird das schraubenbestückte Magazinband dem Schraubendreher getaktet zugeführt, wobei der Antrieb des Magazins mechanisch mit dem Hub des Schraubendrehers verknüpft ist.

Vor allem bei Schraubendrehern, die automatisch über eine Arbeitsfläche gefahren werden, um eine Vielzahl von Schrauben zu setzen, soll das Magazin möglichst eine hohe Kapazität aufweisen, damit nur selten ein Magazinwechsel durchgeführt werden braucht. Da die Aufnahme für ein Magazin aber seitlich am Schraubendreher befestiget ist, wird wegen des hohen Gewichtes der sich im Magazin befindenden Schrauben ein Moment auf den Schraubendreher ausgeübt, was eine Verstärkung der Befestigung erfordert. Dies erhöht aber das Gewicht der Magazinaufnahme, was zusätzlich zum Gewicht der Schrauben den ruckfreien Vorschub des Schraubendrehers über die Arbeitsfläche behindert.

Die Erfindung beruht somit auf der Aufgabe, ein Magazin zu schaffen, in dem Schrauben möglichst kompakt angeordnet werden können, und/oder das geeignet ist, einen automatisch arbeitenden Schraubendreher mit einem derartigen Magazin zu bestücken.

Zur Lösung der Aufgabe sieht die Erfindung vor, dass zwischen der Bodenplatte und der Deckenplatte ein Stützgitter aus senkrecht zueinander verlaufenden Zwischenwänden angeordnet ist und dass die Deckenplatte und die Bodenplatte jeweils einen randständigen umlaufenden Kragen aufweisen, der senkrecht zur Deckenplatte bzw. zur Bodenplatte steht, wobei die Kragen das Stützgitter umfassen.

Die Kragen liegen seitlich an dem Stützgitter an und verhindern somit eine seitliche Verschiebung des Stützgitters, das seinerseits den Abstand zwischen den Platten bestimmt. Mittels Zugmittel (Kabelbinder) können die Platten gegen das Stützgitter gezogen werden.

In einer Anordnung werden die Schrauben lediglich nahe ihres Kopfes und nahe ihrer Spitze gehalten, was vollkommen ausreicht, um die vertikale Ausrichtung der Schrauben zu gewährleisten. Da dabei der Schraubenschaft zwischen den beiden Aufnahmepunkten frei von Kontakten mit dem Magazin ist, wird ein Einschraubvorgang nicht durch Reibungskräfte zwischen dem Schraubenkopf und dem Magazin behindert.

Damit die Bodenplatte und die Deckenplatte sich nicht gegeneinander verschieben können, ist vorgesehen, dass die Bodenplatte und die Deckenplatte durch eine Wand miteinander verbunden sind.

Die Höhe der Wand orientiert sich dabei an der Höhe der Schrauben, die von diesem Magazin aufgenommen werden sollen.

Eine besonders hohe Stabilität erhält man, wenn die Wand durchgehend ist und eine geschlossene Schachtel gebildet ist.

Diese Zwischenwände können so beabstandet sein, dass z. B. jeweils ein System aus n x m Schrauben innerhalb eines Feldes des Stützgitters angeordnet ist, wobei die Werte für n und m vorzugsweise drei betragen.

Um das Durchstoßen des Kopfes durch die Deckenplatte und die Bodenplatte zu erleichtern, weisen die Löcher in der Deckenplatte und in der Bodenplatte, wie dies auch schon von Magazinbändern bekannt ist, einen geschlitzten Rand auf, so dass sich Laschen bilden, die zum Zentrum des Loches weisen und deren freien Enden an dem Schraubenschaft anliegen. Die Laschen werden beim Einschrauben der Schrauben vom Schraubenkopf nach unten und zur Seite gedrückt.

Der Freiraum, der von den Laschen im Zentrum jeweils eines Loches begrenzt wird, ist so gestaltet, dass der Schraubenschaft bzw. die Schraubenspitze darin zentriert gehalten ist.

Vorzugsweise sind die Löcher in der Deckenplatte und in der Bodenplatte identisch ausgeführt.

Das Schraubenmagazin kann vorzugsweise aus Pappe hergestellt werden. Allenfalls ist es notwendig, die Pappe zumindest in Teilbereichen zu kaschieren.

Wie schon erläutert, werden die Magazine derart mit Schrauben versehen, dass der Schaft unmittelbar unterhalb des Kopfes von den Löchern in der Deckenplatte und die Spitzen der Schrauben in den Löchern der Bodenplatte gehalten und zentriert werden. Damit ist eine vertikale Ausrichtung der Schrauben gewährleistet.

Das Magazin findet Verwendung bei einem motorbetriebenen Schraubendreher mit einer automatischen Zuführung von Schrauben.
Der motorbetriebene Schraubendreher ist mit einem sich in Z-Richtung erstreckenden Schraubwerkzeug versehen, dessen Spitze passend zu einer Eingriffsvertiefung in der Oberseite eines Schraubenkopfes ausgebildet ist. Am Schraubendreher befindet sich eine Magazinaufnahme zur Aufnahme eines Schraubenmagazins, in dem die Schrauben in wenigstens zwei Reihen in der Weise angeordnet sind, dass jede dieser Schrauben in Z-Richtung ausgerichtet ist. Der Schraubendreher ist in Z-Richtung gegenüber dem Magazin verschiebbar. Dazu ist ein Gestell vorgesehen, in dem die Magazinaufnahme angeordnet ist und gegenüber dem der Schraubendreher in Z-Richtung verfahrbar ist. Die Magazinaufnahme ist innerhalb des Gestells motorbetrieben in X-und Y-Richtung verfahrbar, so dass jeweils eine Schraube des Magazins unter Schraubwerkzeug positioniert werden kann.

Da das Schraubenmagazin im Wesentlichen zentrisch zum Schraubendreher angeordnet ist, sind die auf den Schraubendreher ausgeübten Kippmomente gering.

Die Verschiebung des Schraubenmagazins innerhalb des Gestells kann vorzugsweise zeitlich mit der Verschiebung des Schraubers von einem Schraubenanbringungsort zum anderen erfolgen.

Eine solche Anordnung aus Schraubendreher und Gestell eignet sich insbesondere zur automatischen Verschraubung einer Arbeitsplatte, z. B. einer vormontierten Wand eines Fertighauses, wobei das Gestell mit dem Schraubendreher gesteuert über die Arbeitsplatte verfahren wird. Eine manuelle Handhabe des Schraubendrehers bzw. des Gestells ist allerdings auch denkbar und möglich. Das Gestell wird dabei der jeweiligen Einsatzart anzupassen sein.

Im Folgenden soll anhand eines Ausführungsbeispiels die Erfindung näher erläutert werden. Dazu zeigen:
- Fig. 1: ein leeres Magazin aufweisend eine gelochte Deckenplatte und entsprechend gelochte Bodenplatte,
- Fig. 1a: eine vergrößerte Darstellung eines Loches (Ausschnitt Z auf Fig. 1) in der Deckenplatte,
- Fig. 2: eine Stützwand, die in das Magazin eingesetzt werden kann,
- Fig. 3: ein mit Schrauben bestücktes Magazin,
- Fig. 4a: die Seitenansicht einer schematischen Anordnung einer motorbetriebenen Schraubendrehereinrichtung,
- Fig. 4b: eine Seitenansicht (Schnitt A-A der Fig. 4a) einer schematischen Anordnung einer motorbetriebenen Schraubendrehereinrichtung, die gegenüber der Fig. 4a um 90° gedreht ist und
- Fig. 4c: eine Draufsicht auf eine motorbetriebene Schraubendrehereinrichtung,
- Fig. 5: eine perspektivische Ansicht eines mit Schrauben bestückten Magazins in einer alternativen Ausführung und

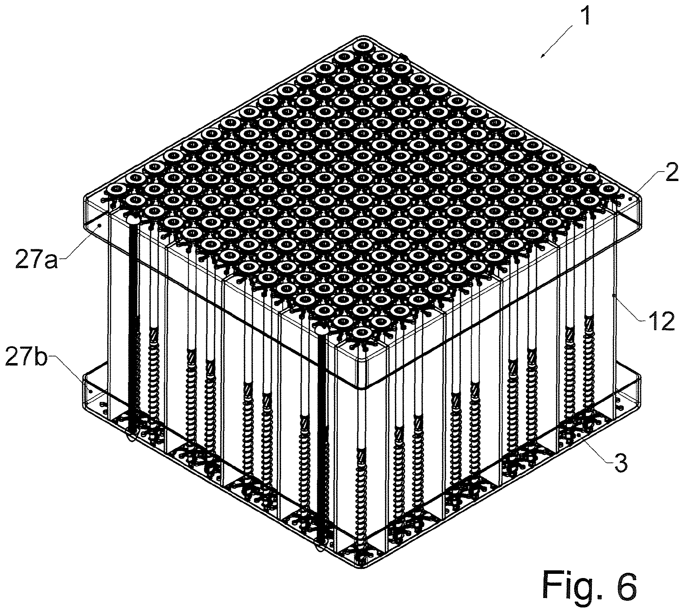

- Fig. 6: eine Explosionsdarstellung des Magazins nach Fig. 5.

Die Schraubendrehereinrichtung ist nicht Gegenstand des Patentschutzes. Es soll lediglich eine mögliche Verwendung des Schraubenmagazins aufgezeigt werden.

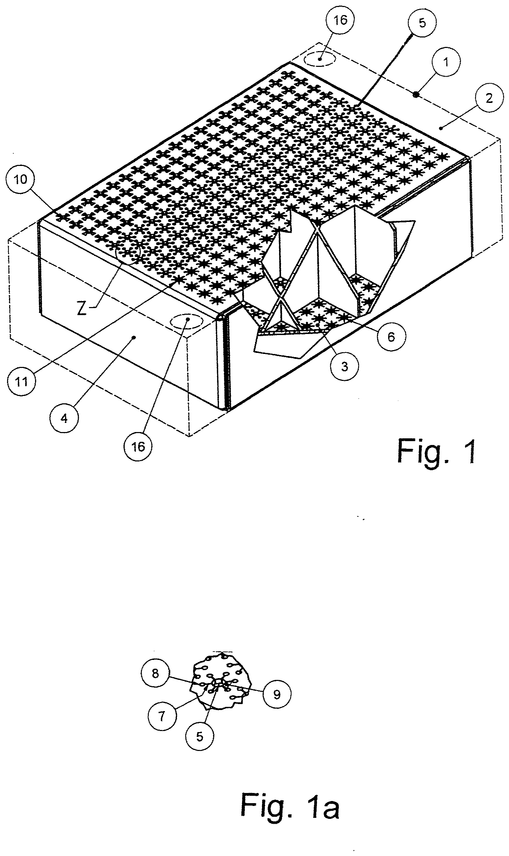

Gemäß Fig. 1 besteht das Magazin aus einer Deckenplatte 2 und einer Bodenplatte 3, die im Abstand zueinander übereinander liegen, parallel zueinander verlaufen und rechteckig sind.

An ihren kurzen Kanten sind sie jeweils mit einer Außenwand 4 verbunden. Die hier nicht zu erkennende Rückseite und/oder die Vorderseite sind ebenfalls mit einer Außenwand versehen, so dass eine verwindungssteife Schachtel entsteht.

In der Deckenplatte 2 befindet sich eine Vielzahl von Löchern 5, die in Reihen und Spalten angeordnet sind und ein regelmäßiges Gitter bilden. Ggf. können die Löcher zu jeweils n x m (vorzugsweise 3x3) Päckchen gegeneinander abgesetzt sein. In diesem Ausführungsbeispiel sind die Löcher 5 aber mit stets gleichem Abstand zueinander angeordnet.

In der Bodenplatte 3 befindet sich ebenfalls eine Vielzahl von Löchern 6, wobei sich die Löcher 5 in der Deckenplatte 2 mit den Löchern 6 in der Bodenplatte 3 paarweise gegenüberliegen.

Die Ränder der Löcher 5 in der Deckenplatte 2 können in vielfältigen Formen geschlitzt sein: In einer ersten Ausführung, die in der Fig. 1a vergrößert dargestellt ist, gehen von einem zentralen Innenloch sternförmige sechs Schlitze 7 aus, die in kleinen Entspannungslöchern 8 enden. Den Bereich zwischen den Schlitzen 7 bilden Laschen 9, die beim Eindrehen der Schrauben nach unten abgeknickt werden. Der Innendurchmesser des Innenloches ist dabei dem Durchmesser des Schaftes angepasst.

Bei einer weiteren Ausführung der Löcher in der Deckenplatte 2 können auch kreuzweise vier etwas breitere Schlitze 10 ausgebildet werden (siehe obere Lochreihen der Fig. 1). In einer noch weiteren Ausführung können die Schlitze 11 in etwa dreieckig sein, wobei sie nach außen hin spitz zulaufen (siehe unter Lochreihen der Fig. 1).

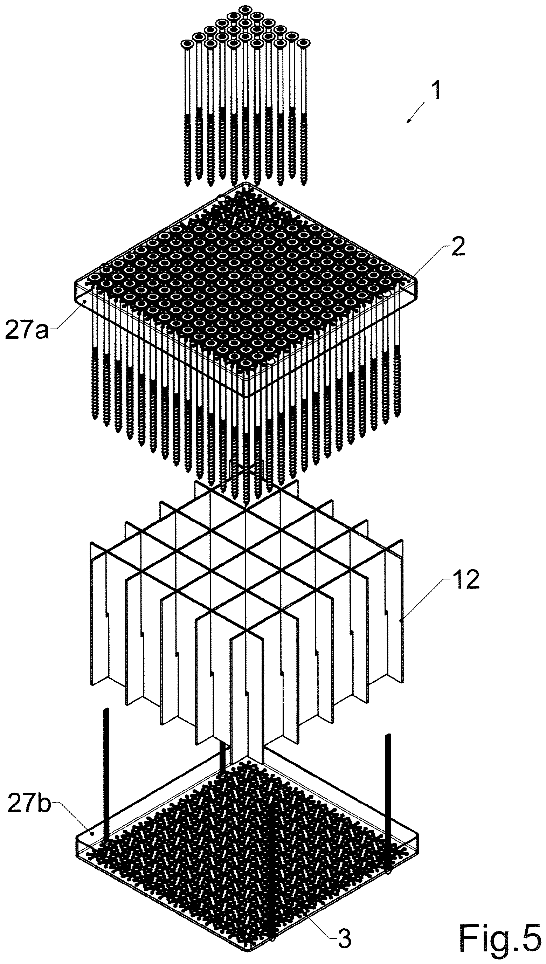

Mit der Fig. 5 ist eine alternative Ausführung des Magazins dargestellt. Demnach besteht es ebenfalls aus einer Deckenplatte 2 und einer Bodenplatte 3, die im Abstand zueinander übereinander liegen, parallel zueinander verlaufen und rechteckig sind und die in gleicher Weise, wie die Ausführung nach Fig. 1, mit Löchern 5, 6 versehen sind. Allerdings weist diese Ausführung aber keine Außenwände auf, vielmehr besitzen sowohl die Deckenplatte 2 als auch die Bodenplatte 3 an ihrem Rand jeweils einen umlaufenden Kragen 27a, 27b, der jeweils senkrecht zur Deckenplatte 2 bzw. zur Bodenplatte 3 steht. Die Kragen 27a, 27b sind voneinander beabstandet und berühren sich daher nicht.

Zwischen der Deckenplatte 2 und der Bodenplatte 3 befindet sich das aus Pappe bestehende Stützgitter 12 mit quer zueinander und senkrecht zur Deckenplatte 2 bzw. zur Bodenplatte 3 stehenden Wänden. Der obere Abschnitt des Stützgitters 12 wird vom Kragen 27a an der Deckenplatte 2 und der obere Abschnitt des Stützgitters 12 wird vom Rahmen 27b an der Bodenplatte 3 umfasst, so dass das Stützgitter 12 gegen eine seitliche Verschiebung fixiert ist.

Das Stützgitter 12 definiert damit den Abstand zwischen der Deckenplatte 2 und der Bodenplatte 3. Die Höhe der jeweils verwendeten Gitterstruktur wird durch die Länge der Schrauben bestimmt, die in dem Magazin 1 aufgenommen werden sollen. Um ein Lösen der Deckenplatte 2 und der Bodenplatte 3 vom Stützgitter 12 zu verhindern, werden diese - wenn nötig - durch Zugelemente in Form von Kabelbinderstreifen gegen das Stützgitter 12 gezogen.

Die Darstellung der Lochformen in der Fig. 1 bzw. 5 dient nur der Erläuterung der Lochformen. Tatsächlich kommt in einem Magazin jeweils nur eine dieser Formen zum Einsatz. Die Löcher werden durch Stanzen gebildet, wobei das Stanzwerkzeug die Form der Löcher vorgibt.

Die Löcher 6 in der Bodenplatte 3 sind dazu geeignet, die Spitze einer Schraube aufzunehmen. Diese Löcher 6 werden dazu in identischer Weise wie die Löcher 5 in der Deckenplatte ausgebildet sein.

In bestimmten Fällen brauchen die Löcher 6 in der Bodenplatte 3 nicht vorher in die Bodenplatte 3 eingestanzt werden, vielmehr werden die Schrauben leicht in die Bodenplatte 3 eingeschraubt, wodurch sich ein Loch bildet.

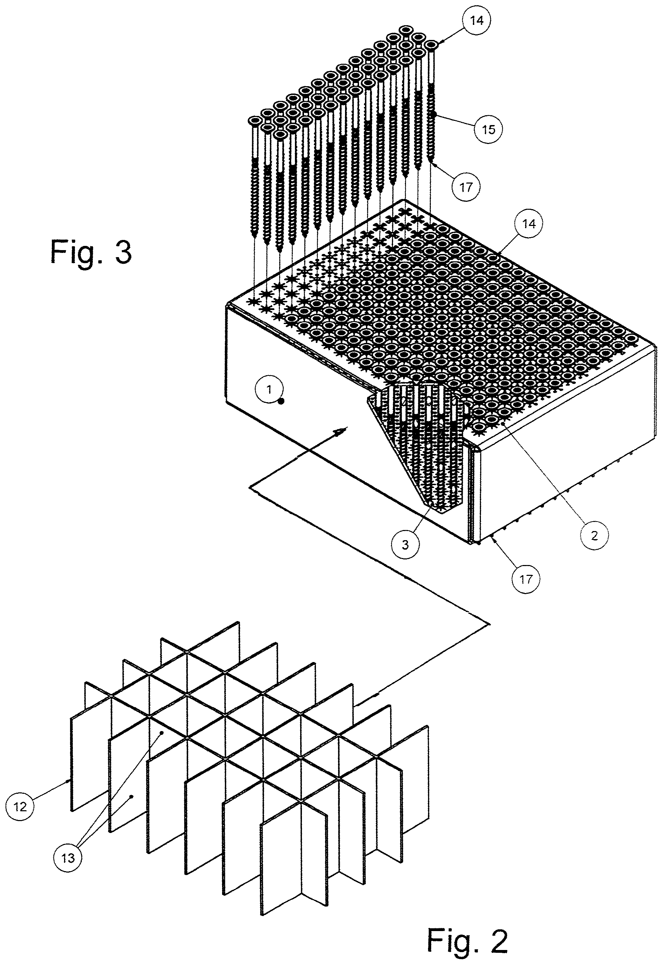

Um zu verhindern, dass Bodenplatte 3 und Deckenplatte 2 sich wölben bzw. durchbiegen, kann zwischen ihnen ein Stützgitter 12 angeordnet werden, wie dies die Fig. 2 zeigt. Dieses besteht aus einer Vielzahl von Zwischenwänden 13, die in Längs- und Querrichtung jeweils in einen rechten Winkel zueinander verlaufen.

In jeder der Öffnungen des Stützgitters befinden sich z. B. neun Schrauben eines 3x3 Quadranten der Deckenplatte.

Die Fig. 3 zeigt die Bestückung eines Schraubenmagazins. Die Schraubenköpfe 14 liegen kurz oberhalb der Deckenplatte 2, wobei jeweils der Bereich des Schaftes 15 kurz unterhalb des Schraubenkopfes 14 in den Löchern 6 der Deckenplatte gehalten und zentriert wird.

Die Schraubenspitze 17 ragt nach unten über die Bodenplatte hinaus.

Solche Magazine können relativ leicht aus Pappe, ggf. kaschierter Pappe, hergestellt werden und aus einer gestanzten Pappenbahn entsprechend gefaltet werden.

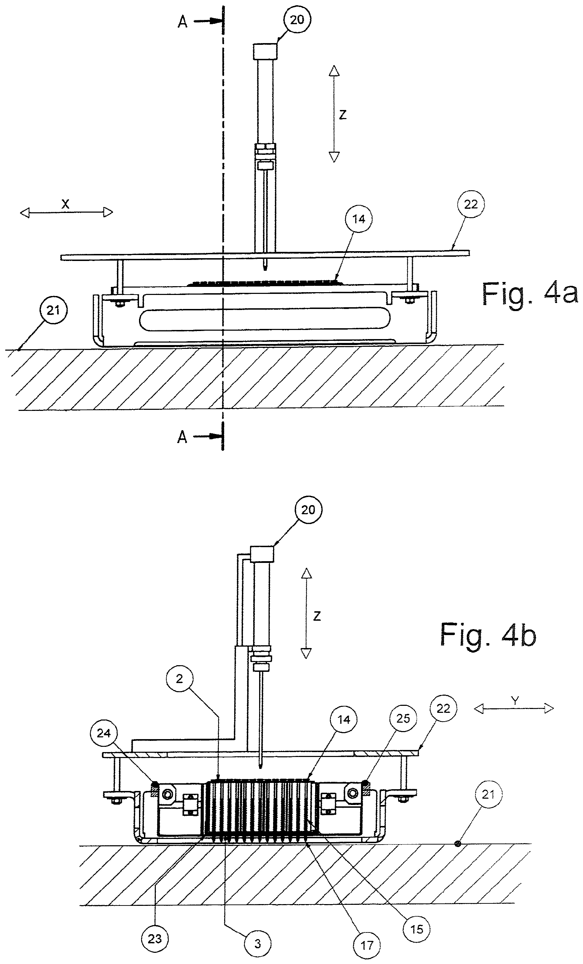

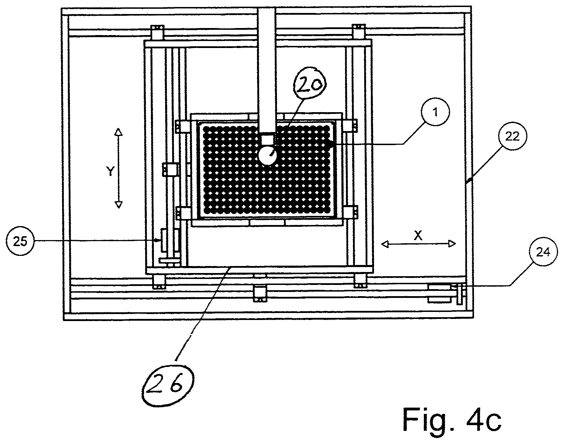

In der Bodenplatte 3 und Deckenplatte 2 können ggf. auch weitere Aufnahmelöcher 16 vorgesehen werden, in der Haltemittel eingreifen, um das Magazin 1 in einer Magazinaufnahme an einem Schraubendreher zu halten, was in der folgenden Fig. 4 näher erläutert werden soll. Da diese Aufnahmelöcher 16 fakultativ sind, ist eine dazu ggf. notwendige Erweiterung de Magazins gestrichelt dargestellt.

Fig. 4 zeigt schematisch einen Schraubendreher 20, der automatisch über eine Arbeitsplatte 21, z. B. ein Paneel, verfahren wird, wobei es sich z. B. um die vormontierte Wand eines Fertighauses handeln kann.

Der Schraubendreher 20 befindet sich in einem Gestell 22, gegenüber dem er in Z-Richtung verfahrbar ist, um einen Schraubvorgang einzuleiten. In X- und Y-Richtung ist der Schraubendreher 20 unverrückbar gegenüber dem Gestell 22 gehalten.

Der Schraubendreher 20 wird zusammen mit dem Gestell über die Arbeitsplatte 21 mittels einer hier nicht dargestellten Verschiebevorrichtung getaktet verfahren, um den Schraubendreher 20 vom Schraubenanbringungsort zum Schraubenanbringungsort zu verfahren.

In oder an dem Gestell 22 befindet sich eine Magazinaufnahme 23, die gegenüber dem Gestell 22 in X- und Y-Richtung verfahrbar ist. Dazu sind zwei Servomotoren 24, 25 vorgesehen, die am Gestell 22 direkt bzw. indirekt befestigt sind. Die Servomotoren 24, 25 treiben jeweils die Gewindeschnecke einer Spindel an, deren Spindelnuss mit der Magazinaufnahme 23 gekoppelt ist.

Wie aus der Fig. 4c deutlicher hervorgeht, wird das Gestell 22 von einem Außenrahmen gebildet, dem gegenüber ein Zwischenrahmen 26 in X-Richtung von dem einen Servomotor 24, der unmittelbar am Gestell 22 befestigt ist, verschoben wird. Innerhalb des Zwischenrahmens befindet sich die Magazinaufnahme 23, die von dem anderen Servomotor 25, der am Zwischenrahmen 26 befestigt ist, in Y-Richtung verschoben wird.

Die Magazinaufnahme 23 ist so eingerichtet, dass sie das zuvor beschriebene, mit Schrauben bestückte Magazin 1 aufnehmen kann. Zur Sicherung des Magazins 1 in Magazinaufnahme 23 greifen hier nicht gezeigte Bolzen in die Aufnahmelöcher 16 ein.

Die Servomotoren 24, 25 werden so angesteuert, dass die Schrauben nacheinander unter das Schraubwerkzeug des Schraubendrehers 20 gefahren werden, damit dieser diese in die Arbeitsplatte einschrauben kann.

Kurze Stellwege erhält man, wenn jeweils eine benachbarte Schraube ausgesucht wird, also das Magazin Reihe für Reihe abgearbeitet wird. Es könnte aber auch daran gedacht werden, dass die Auswahl der Schrauben ungleichmäßig verteilt über ihre Anordnung im Magazin 1 erfolgt, so dass die jeweils verbliebenen Schrauben weiterhin zur Stabilität des Magazins 1 beitragen, so dass ggf. auf ein Stützgitter verzichtet werden kann.

Sobald das Schraubenmagazin 1 geleert ist, fährt das Gestell 22 zum Rand des Paneels, so dass der Wechsel des Magazins 1 erfolgen kann.

Da die Schrauben in dem Magazin exakt vertikal ausgerichtet sind und die Servomotoren so genau arbeiten, so dass diese exakt unter dem Schraubendreher platziert werden können, können die Schrauben beim Einschrauben weder verkanten noch rutschen sie seitlich aus dem Werkzeug ab.

Sobald die Werkzeugspitze in dem Schraubenkopf platziert und die Schraube ein kurzes Stück in die Arbeitsfläche eingeschraubt ist, wird die Schraube stabil zwischen Arbeitsfläche und Werkzeug gehalten, so dass eine Zentrierung und Halterung durch das Magazin nicht länger notwendig ist. Voraussetzung dafür ist aber, dass die Spitze knapp oberhalb der Arbeitsfläche positioniert wird.

Durch die im Wesentlichen zentrische Anordnung des Magazins unterhalb des Schraubendrehers ergeben sich keine Kippmomente, die den Schraubendreher verkippen lassen könnten, so dass der Schraubendreher mitsamt dem Gestell und dem darin sich befindenden Magazin im Wesentlichen ruckfrei über die Arbeitsfläche verschoben werden kann.

Dabei könnte auch daran gedacht werden, das Magazin jeweils während der Verschiebung des Schraubendrehers über die Arbeitsfläche zum Schraubendreher zu zentrieren und erst, wenn der Schraubendreher einen neuen Platz erreicht hat, das Magazin so zu verschieben, dass sich eine Schraube unterhalb des Schrauberwerkzeuges befindet.

### Bezugszeichenliste

- 1: Magazin
- 2: Deckenplatte
- 3: Bodenplatte
- 4: Außenwand
- 5: Löcher

- 6: Löcher
- 7: Schlitze
- 8: Entspannungslöcher
- 9: Laschen
- 10: Schlitze

- 11: Schlitze
- 12: Stützgitter
- 13: Zwischenwände
- 14: Schraubenköpfe
- 15: Schaft

- 16: Aufnahmelöcher
- 17: Schraubenspitze
- 20: Schraubendreher
- 21: Arbeitsplatte
- 22: Gestell

- 23: Magazinaufnahme
- 24: Servomotor
- 25: Servomotor
- 26: Zwischenrahmen
- 27a: Kragen

- 27b: Kragen

## Patentansprüche

1. Schraubenmagazin (1) zur stehenden Aufnahme von Schrauben in wenigstens zwei Reihen, wobei das Schraubenmagazin eine Bodenplatte (3) und eine Deckenplatte (2) aufweist, die beide mit einer Vielzahl von Löchern (5, 6) versehen sind, die sich paarweise gegenüberliegen, wobei die Löcher (5) in der Deckenplatte (2) zur Aufnahme des Schaftes einer Schraube und die Löcher (6) in der Bodenplatte (3) zur Aufnahme der Schraubenspitze (17) ausgebildet sind, **dadurch gekennzeichnet, dass** zwischen der Bodenplatte (3) und der Deckenplatte (2) ein Stützgitter (12) aus senkrecht zueinander verlaufenden Zwischenwänden (13) angeordnet ist und dass die Deckenplatte (2) und die Bodenplatte (3) jeweils einen randständigen umlaufenden Kragen (27a, 27b) aufweisen, der senkrecht zur Deckenplatte (2) bzw. zur Bodenplatte (3) steht, wobei die Kragen das Stützgitter (12) umfassen.

2. Schraubenmagazin nach Anspruch 1, **dadurch gekennzeichnet, dass** die Bodenplatte (3) und die Deckenplatte (2) durch eine Wand miteinander verbunden sind.

3. Schraubenmagazin nach Anspruch 2, **dadurch gekennzeichnet, dass** die Wand durchgehend ist und eine geschlossene Schachtel gebildet ist.

4. Schraubenmagazin nach Anspruch 1, **dadurch gekennzeichnet, dass** die Zwischenwände (13) so beabstandet sind, dass jeweils ein System aus n x m Schrauben innerhalb eines Feldes des Stützgitters (12) angeordnet ist.

5. Schraubenmagazin nach einem der vorhergehenden Ansprüche, **dadurch gekennzeichnet, dass** die Löcher (5, 6) in der Deckenplatte und/oder Bodenplatte einen geschlitzten Rand aufweisen, so dass sich Laschen (9) bilden, die zum Zentrum des Loches weisen.

6. Schraubenmagazin nach einem der vorhergehenden Ansprüche, **dadurch gekennzeichnet, dass** es aus Pappe hergestellt ist.

7. Schraubenmagazin nach Anspruch 6, **dadurch gekennzeichnet, dass** die Pappe zumindest in Teilbereichen kaschiert ist.

8. Mit Schrauben bestücktes Schraubenmagazin (1) nach einem der vorhergehend Ansprüche, **dadurch gekennzeichnet, dass** der Schaft der Schraube unmittelbar unterhalb des Schraubenkopfes (14) von den Löchern (5) in der Deckenplatte (2) und die Spitzen (17) der Schrauben in den Löchern (6) der Bodenplatte (3) gehalten und zentriert sind.

## Claims

1. A screw magazine (1) for receiving screws vertically in at least two rows, the screw magazine comprising a bottom plate (3) and a top plate (2) both provided with a plurality of holes (5, 6) facing each other in pairs, the holes (5) in the top plate (2) being formed for receiving the shank of a screw and the holes (6) in the bottom plate (3) being formed for receiving the screw tip (17), **characterized in that** between the bottom plate (3) and the top plate (2) there is a supporting grid (12) of partition walls (13) extending perpendicular to one another, and **in that** the top plate (2) and the bottom plate (3) each have a peripheral edge collar (27a, 27b) which extends perpendicular to the top plate (2) and the bottom plate (3), respectively, the collars encompassing the supporting grid (12).

2. The screw magazine according to claim 1, **characterized in that** the bottom plate (3) and the top plate (2) are connected to each other by a wall.

3. The screw magazine according to claim 2, **characterized in that** the wall is continuous and a closed box is formed.

4. The screw magazine according to claim 1, **characterized in that** the partition walls (13) are spaced such that in each case a system of n × m screws is arranged within a field of the supporting grid (12).

5. The screw magazine according to any one of the preceding claims, **characterized in that** the holes (5, 6) in the top plate and/or bottom plate have a slotted edge so as to form flaps (9) facing towards the center of the hole.

6. The screw magazine according to any one of the preceding claims, **characterized in that** it is made of cardboard.

7. The screw magazine according to claim 6, **characterized in that** the cardboard is laminated at least in partial areas.

8. The screw magazine (1) fitted with screws according to any one of the preceding claims, **characterized in that** the shank of the screw is held and centered directly below the screw head (14) by the holes (5) in the top plate (2) and the tips (17) of the screws are held and centered in the holes (6) of the bottom plate (3).

## Revendications

1. Magasin pour vis (1) pour le logement vertical de vis dans au moins deux rangées, le magasin pour vis comportant au moins une plaque de fond (3) et une plaque de couverture (2), les deux étant dotées d'une pluralité de trous (5,6) qui s'opposent par paires, les trous (5) étant constitués dans la plaque de couverture (2) pour recevoir la tige d'une vis et les trous (6) dans la plaque de fond (3) pour recevoir la pointe de vis (17), **caractérisé en ce qu'**entre la plaque de fond (3) et la plaque de couverture (2), une grille de support (12) est disposée à partir de parois intermédiaires (13) passant perpendiculairement l'une par rapport à l'autre et **en ce que** la plaque de couverture (2) et la plaque de fond (3) comportent respectivement une collerette (27a, 27b) périphérique en bordure qui est perpendiculaire à la plaque de couverture (2) ou à la plaque de fond (3), les collerettes entourant la grille de support (12).

2. Magasin pour vis selon la revendication 1, **caractérisé en ce que** la plaque de fond (3) et la plaque de couverture (2) sont reliées entre elles par une paroi.

3. Magasin pour vis selon la revendication 2, **caractérisé en ce que** la paroi est d'un seul tenant et qu'une boîte fermée est formée.

4. Magasin pour vis selon la revendication 1, **caractérisé en ce que** les parois intermédiaires (13) sont espacées de telle sorte qu'un système composé de n x m vis est respectivement disposé à l'intérieur d'un champ de la grille de support (12).

5. Magasin pour vis selon l'une quelconque des revendications précédentes, **caractérisé en ce que** les trous (5, 6) dans la plaque de couverture et/ou la plaque de fond comportent un bord fendu de telle sorte que des languettes (9) se forment qui sont dirigées vers le centre du trou.

6. Magasin pour vis selon l'une quelconque des revendications précédentes, **caractérisé en ce qu'**il est fabriqué en carton.

7. Magasin pour vis selon la revendication 6, **caractérisé en ce que** le carton est recouvert au moins dans des zones partielles.

8. Magasin pour vis doté de vis (1) selon l'une quelconque des revendications précédentes, **caractérisé en ce que** la tige de la vis est maintenue et centrée directement en dessous de la tête de vis (14) par les trous (5) dans la plaque de couverture (2) et les pointes (17) des vis sont maintenues et centrées dans les trous (6) de la plaque de fond (3).
